# EUROPÄISCHE PATENTSCHRIFT

(11) **EP 1 731 022 B1**
(45) Veröffentlichungstag und Bekanntmachung des Hinweises auf die Patenterteilung: **16.12.2009**
(21) Anmeldenummer: 06114843.3
(22) Anmeldetag: 01.06.2006
(51) Int. Cl.: A01F 12/44

(54) **Reinigungseinrichtung für einen Mähdrescher**
Cleaning device for a combine
Dispositif de nettoyage pour une moissonneuse-batteuse

(30) Priorität: 09.06.2005 DE 102005026608
(43) Veröffentlichungstag der Anmeldung: 13.12.2006
(73) Patentinhaber: Deere & Company, Moline, IL 61265-8098 (US)
(72) Erfinder: Weichholdt, Dirk, 57200, Sarreguemines (FR)
(74) Vertreter: Holst, Sönke

(56) Entgegenhaltungen:
- EP-A- 0 701 772
- FR-A- 2 611 424
- US-A- 4 307 732
- US-A1- 2002 086 722
- US-A1- 2004 023 704

## Beschreibung

Die Erfindung betrifft eine Reinigungseinrichtung für einen Mähdrescher, mit einem Vorreinigungssieb, dessen Oberseite im Betrieb ein Gemisch aus Korn und Spreu zuführbar ist, einem Obersieb, dem das von der Oberseite des Vorreinigungssiebs abgegebene Gemisch aus Korn und Spreu zuführbar ist, einem Untersieb, dem das durch das Vorreinigungssieb hindurch tretende, vorgereinigte Gemisch aus Korn und Spreu zuführbar ist, und mit einem Gebläse zur Beaufschlagung des Vorreinigungssiebs, des Obersiebs und des Untersiebs mit Luftströmen.

### Stand der Technik

In der DE 30 42 734 C wird ein Mähdrescher mit einem Mehrtrommeldreschwerk beschrieben. Das durch Öffnungen im Dreschkorb und den nachgeordneten Separierkörben hindurch strömende Gemisch aus Korn und Spreu wird durch Förderböden einer Fallstufe zugeführt, die durch einen oberen Gebläseauslass mit einem nach hinten gerichteten Luftstrom beaufschlagt wird. Unterhalb dieser Fallstufe befindet sich ein ebenfalls vom oberen Gebläseauslass mit einem Luftstrom beaufschlagtes Vorreinigungssieb, unter dem ein weiterer Transportboden angeordnet ist. Das auf der Oberseite des Vorreinigungssiebs nach hinten wandernde Gemisch fällt auf ein Obersieb, während die durch das Vorreinigungssieb nach unten fallenden, vorgereinigten Körner und Spreu durch den weiteren Transportboden auf ein Untersieb verbracht werden. Das Unter- und Obersieb werden durch einen unteren Gebläseauslass mit einem nach hinten gerichteten Luftstrom beaufschlagt.

Hier ist als nachteilig anzusehen, dass das durch den weiteren Transportboden auf das Untersieb geförderte, vorgereinigte Gemisch aus Korn und Spreu relativ stark verdichtet ist, da es lediglich durch das Vorreinigungssieb gesiebt und durch den weiteren Transportboden gefördert wurde. Es ist zwar eine Fallstufe zwischen dem weiteren Transportboden und dem Untersieb vorhanden, doch wird sie nur in recht geringem Maße mit einem Luftstrom beaufschlagt. Das Untersieb wird demnach mit verdichtetem Material beaufschlagt, das bei einer gegebenen Sieböffnung den möglichen Durchsatz des Untersiebs und somit des Mähdreschers begrenzt. Es besteht zwar die Möglichkeit, die Lamellen des Untersiebs weiter zu öffnen, um den Durchsatz zu vergrößern; das hat jedoch nachteilige Folgen für die Reinheit des gewonnenen Korns.

Dokument EP-0701772-A1 offenbart weiterhin eine Reinigungseirichtung mit allen kennzeichnen aus dem Oberbegriff des Anspruchs 1.

### Aufgabe der Erfindung

Die der Erfindung zu Grunde liegende Aufgabe wird darin gesehen, eine verbesserte Reinigungseinrichtung bereitzustellen, die einen größeren Durchsatz bzw. eine bessere Reinheit des Korns im Korntank ermöglicht.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, das durch das Vorreinigungssieb hindurch strömende, vorgereinigte Gemisch aus Korn und Spreu auf seinem Weg zum Untersieb über einen Rost zu leiten, der für Luft durchlässig ist und mit einem nach hinten und oben gerichteten Luftstrom beaufschlagt wird. Der Rost ist vom Untersieb getrennt angeordnet und definiert eine sich horizontal erstreckende Förderstrecke, über die das Gemisch transportiert wird.

Auf diese Weise erreicht man eine zusätzliche Vorreinigung des dem Untersieb vom Vorreinigungssieb zugeführten Gemischs, da der durch den Rost strömende Luftstrom einen Teil der Spreu aus dem oberhalb des Rosts geförderten Gemisch fort bläst. Außerdem wird das Gemisch aufgelockert und kann durch das Untersieb leichter getrennt werden. Dadurch ist ein höherer Durchsatz und/oder Reinheitsgrad des gewonnenen Korns erzielbar.

In einer bevorzugten Ausführungsform ist das Gebläse mit einem ersten und einem zweiten Gebläseauslass versehen. Der zweite Gebläseauslass versorgt im Betrieb das Vorreinigungssieb mit einem nach hinten und oben gerichteten Luftstrom, während der erste Gebläseauslass das Untersieb und den Rost mit einem nach hinten und oben gerichteten Luftstrom beaufschlagt. Das Obersieb wird dann vorzugsweise durch den Rost und/oder das Untersieb hindurch mit einem ebenfalls nach hinten und oben gerichteten Luftstrom versorgt. Ist stromab des Vorreinigungssiebs im Übergangsbereich zum Obersieb eine Fallstufe vorgesehen, die eine Trennung des Gemischs aus Korn und Spreu von leichteren Bestandteilen ermöglicht, wird diese zweckmäßigerweise ebenfalls durch den Rost hindurch vom ersten Gebläseauslass mit einem Luftstrom versorgt.

Der Rost befindet sich vorzugsweise etwa in der Ebene des Untersiebs und in der Fahrtrichtung davor. Dadurch erübrigen sich zusätzliche Förderer, um das Gemisch vom Rost zum Untersieb zu transportieren.

Der Rost umfasst in einer bevorzugten Ausführungsform mehrere sich mit ihrer Längsachse quer zur Fahrtrichtung erstreckende Lamellen, die in Fahrtrichtung hintereinander angeordnet sind. Die Lamellen sind in sich flach und erstrecken sich schräg nach hinten und oben. Sie können alle oder zum Teil um ihre Längsachse winkelverstellbar angeordnet oder starr befestigt sein. Es hat sich auch als zweckmäßig erwiesen, die in Fahrtrichtung vorn angeordneten Lamellen (d. h. den Abstand zwischen ihrer vor- und nachlaufenden Kante) kürzer zu gestalten als weiter hinten angeordnete Lamellen.

Der Rost wird vorzugsweise während des Betriebs gemeinsam mit dem Untersieb in eine Schwingbewegung versetzt. Es wäre aber auch denkbar, ihn starr mit dem Rahmen des Mähdreschers zu verbinden.

### Ausführungsbeispiel

In den Zeichnungen sind zwei nachfolgend näher beschriebene Ausführungsbeispiele der Erfindung dargestellt. Es zeigt:
- Fig. 1: eine schematische seitliche Ansicht eines Mähdreschers mit einer erfindungsgemäßen Reinigungseinrichtung,
- Fig. 2: eine vergrößerte, schematische seitliche Ansicht der Reinigungseinrichtung aus Figur 1, und
- Fig. 3: eine vergrößerte, schematische seitliche Ansicht einer zweiten Ausführungsform einer Reinigungseinrichtung.

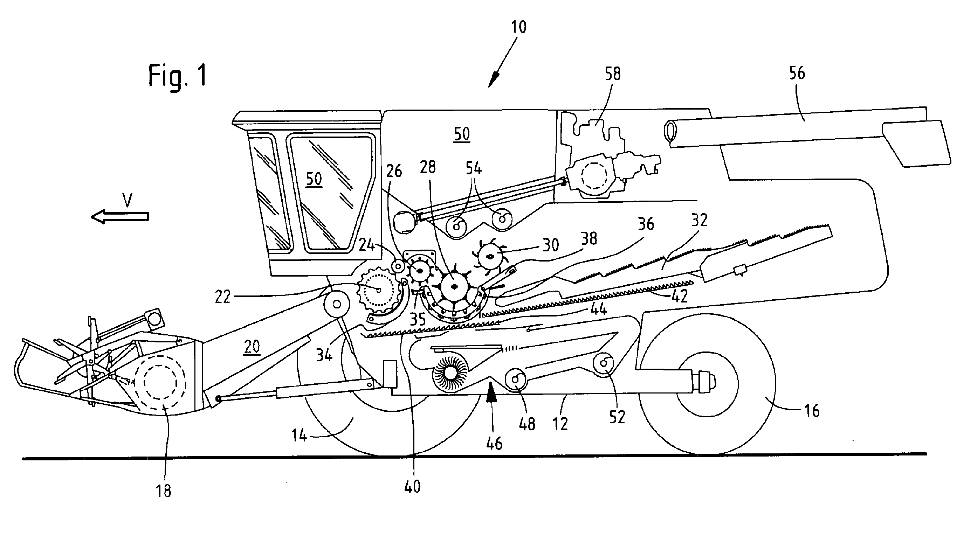

Die Figur 1 zeigt einen selbst fahrenden Mähdrescher 10 mit einem Rahmen 12, der sich über angetriebene vordere Räder 14 und lenkbare rückwärtige Räder 16 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V des Mähdreschers 10 im Erntebetrieb.

An den vorderen Endbereich des Mähdreschers 10 ist eine Erntegutbergungsvorrichtung 18 in Form eines Schneidwerks abnehmbar angeschlossen, um beim Erntebetrieb Erntegut in Form von Getreide oder andere, dreschbare Halmfrüchte von dem Feld zu ernten und es nach oben und hinten durch einen Schrägförderer 20 einem Mehrtrommeldreschwerk zuzuführen, das - in Fahrtrichtung V hintereinander angeordnet - eine Dreschtrommel 22, eine Abstreiftrommel 24, eine oberschlächtig arbeitende Fördertrommel 26, einen Tangentialseparator 28 sowie eine Wendetrommel 30 umfasst. Stromab der Wendetrommel 30 befindet sich ein Strohschüttler 32. Die Dreschtrommel 22 ist in ihrem unteren und rückwärtigen Bereich von einem Dreschkorb 34 umgeben. Unterhalb der Fördertrommel 26 ist eine mit Öffnungen versehene oder geschlossene Abdeckung 35 angeordnet, während sich oberhalb der Fördertrommel 26 eine fest stehende Abdeckung und unterhalb des Tangentialseparators 28 ein Separierkorb 36 mit verstellbaren Fingerelementen befindet. Unterhalb der Wendetrommel 30 ist ein Fingerrechen 38 angeordnet.

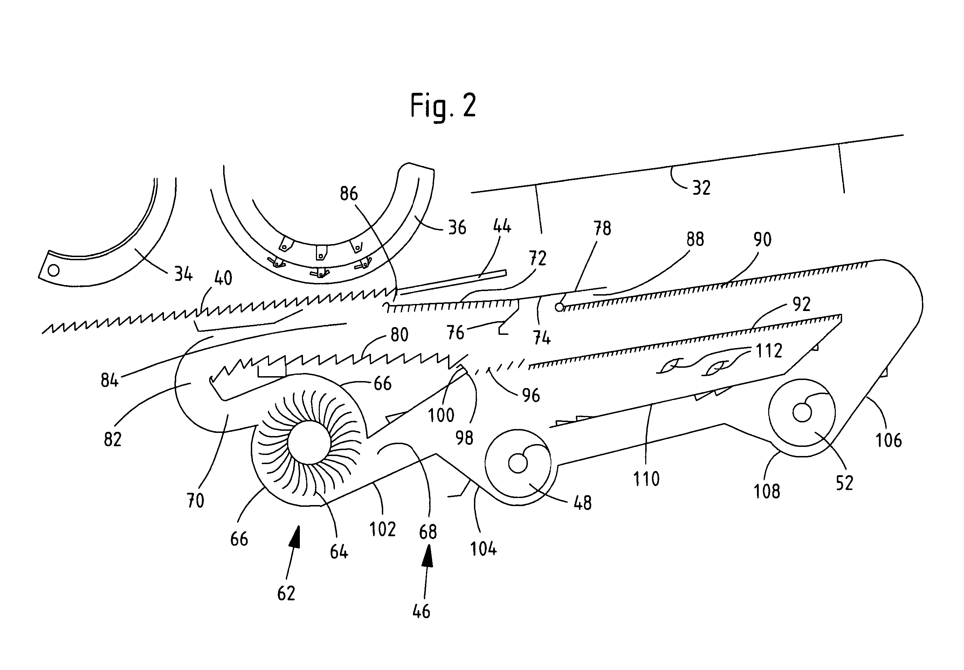

Unterhalb des Mehrtrommeldreschwerks befindet sich ein vorderer Förderboden 40, der im Betrieb eine abwechselnd nach vorn und hinten gerichtete Schwingbewegung durchführt. Ein hinterer Förderboden 42 ist unterhalb des Strohschüttlers 32 angeordnet und vollführt im Betrieb ebenfalls eine abwechselnd nach hinten und vorn gerichtete Schwingbewegung. Der vordere Förderboden 40 transportiert das durch den Dreschkorb 34 und durch den Tangentialseparator 36 nach unten hindurch tretende Gemisch aus Korn und Spreu nach hinten, während der hintere Förderboden 42 das durch den Strohschüttler 32 hindurch strömende Gemisch aus Korn und Spreu nach vorn transportiert. Der hintere Förderboden 42 übergibt sein Gemisch an seinem vorderen Ende an den vorderen Förderboden 40, der es durch einen rückwärtigen Fingerrechen 44 nach unten abgibt. Das vom vorderen Förderboden 40 abgegebene Gemisch gelangt dann in eine Reinigungseinrichtung 46, die in der Figur 2 detaillierter dargestellt ist.

Durch die Reinigungseinrichtung 46 gereinigtes Getreide wird mittels einer Körnerschnecke 48 einem nicht gezeigten Elevator zugeführt, der es in einen Korntank 50 befördert. Eine Überkehrschnecke 52 gibt unausgedroschene Ährenteile durch einen weiteren nicht gezeigten Elevator zurück in den Dreschprozess. Die Spreu kann an der Rückseite der Siebeinrichtung durch einen rotierenden Spreuverteiler ausgeworfen werden, oder sie wird durch einen stromab des Strohschüttlers 32 angeordneten Strohhäcksler (nicht eingezeichnet) ausgetragen. Das gereinigte Getreide aus dem Korntank 50 kann durch ein Entladesystem mit Querschnecken 54 und einem Entladeförderer 56 entladen werden.

Die genannten Systeme werden mittels eines Verbrennungsmotors 58 angetrieben und von einem Bediener aus einer Fahrerkabine 60 heraus kontrolliert und gesteuert. Die verschiedenen Vorrichtungen zum Dreschen, Fördern, Reinigen und Abscheiden befinden sich innerhalb des Rahmens 12. Außerhalb des Rahmens 12 befindet sich eine Außenhülle, die größtenteils aufklappbar ist.

Es bleibt anzumerken, dass das hier dargestellte Mehrtrommeldreschwerk nur ein Ausführungsbeispiel ist. Es könnte auch durch eine einzige quer angeordnete Dreschtrommel und eine nachgeordnete Trenneinrichtung mit einem Strohschüttler oder einem oder mehreren Trennrotoren ersetzt werden. Es ist aber auch denkbar, einen rotierenden Axialabscheider zu verwenden, der einen Dreschabschnitt und einen Trennabschnitt aufweist. Es kann ein einziger Axialabscheider oder zwei (oder mehrere) nebeneinander angeordnete Axialabscheider Verwendung finden.

Die Reinigungseinrichtung 46 ist in der Figur 2 in einer vergrößerten seitlichen Ansicht wiedergegeben. Sie umfasst ein Gebläse 62, das sich aus einem in Drehung (in der Figur 2 im Gegenuhrzeigersinn) versetzbaren Rotor 64 und einem den Rotor 64 umschließenden Gehäuse 66 zusammensetzt. Das Gehäuse 66 hat einen ersten Gebläseauslass 68 und einen zweiten Gebläseauslass 70.

Weiterhin umfasst die Reinigungseinrichtung 46 ein Vorreinigungssieb 72 mit in einem Siebrahmen abgestützten, dort um ihre Längsachse im Winkel verstellbar gelagerten Sieblamellen, das sich unterhalb des Fingerrechens 44 befindet und sich näherungsweise von der rückwärtigen Kante des vorderen Förderbodens 40 horizontal nach hinten und geringfügig nach oben erstreckt. Am rückwärtigen Ende des Vorreinigungssiebs 72 folgt ein geschlossenes Blech 74, das sich in einer schräg nach unten gerichteten Leitfläche 76 fortsetzt, sowie ein hinter dem Blech 74 angeordneter Fingerrechen 78.

Unterhalb der vorderen Hälfte des Vorreinigungssiebs 72 befindet sich ein Förderboden 80, unter dem wiederum der obere Teil des Gehäuses 66 des Gebläses 62 angeordnet ist. Der zweite Gebläseauslass 70 ist nach vorn gerichtet und leitet die Luft in einen wiederum nach hinten und oben gekrümmten Kanal 82, der die Luft in den Zwischenraum 84 zwischen dem vorderen Förderboden 40 und dem Förderboden 80 leitet, in dem sie nach hinten strömt. Ein Teil dieser Luft gelangt zu einer Fallstufe 86, die sich vertikal zwischen dem rückwärtigen Ende des vorderen Förderbodens 40 und dem Vorreinigungssieb 72 befindet, und bewirkt bereits eine gewisse Trennung von schwererem Korn und leichterer Spreu, die nach hinten fort getragen wird. Der übrige Teil der durch den Zwischenraum 84 strömenden Luft erreicht, teilweise umgeleitet durch die Leitfläche 76, die Unterseite des Vorreinigungssiebs 72 und durchströmt es in einer nach hinten und oben gerichteten Strömung. Korn und in einem gewissen Maß auch Spreu fallen zwischen den Sieblamellen des Vorreinigungssiebs 72 hindurch, während das verbleibende Gemisch aus Korn und Spreu an der Rückseite des Vorreinigungssiebs 72 durch den Fingerrechen 78 hindurch nach unten fällt.

Dort gelangt es über eine weitere Fallstufe 88 auf ein Obersieb 90, unter dem ein Untersieb 92 angeordnet ist. Das Obersieb 90 und das Untersieb 92 umfassen jeweils in einem Rahmen angeordnete, um ihre Längsachse im Winkel unabhängig voneinander verstellbare Sieblamellen. Zwischen dem vorderen Ende des Untersiebs 92 und einem oberen Leitblech 94, das sich am ersten Gebläseauslass 68 an das Gehäuse 66 anschließt und sich schräg nach hinten und oben erstreckt, ist ein Rost 96 angeordnet. Oberhalb einer dem Rost 96 benachbarten Kante 98 erstreckt sich das obere Leitblech 94 in einem Bereich 100 wiederum schräg nach vorn und oben und endet in der Nähe des rückwärtigen Endes des Förderbodens 80.

Der Rost 96 umfasst in der dargestellten Ausführungsform fünf hintereinander angeordnete, ebene Lamellen, deren Längsachsen sich quer zur Fahrtrichtung V erstrecken. Die Lamellen liegen jeweils in schräg nach hinten und oben verlaufenden Ebenen. Die Länge der Lamellen ist (in Richtung des Luftstroms betrachtet) umso kleiner, je weiter die jeweilige Lamelle vorn angeordnet ist. Die Lamellen sind in einem mit dem Untersieb 92 verbundenen Rahmen (nicht eingezeichnet) befestigt.

Der untere Teil des Gehäuses 66 des Gebläses 62 geht rückwärtig des ersten Gebläseauslasses 68 nach hinten in ein unteres Leitblech 102 über, das unterhalb des Bereichs 100 in einen trichterförmigen Sumpf 104 der Körnerschnecke 48 übergeht. An das rückwärtige Ende des Obersiebs 90 schließt sich ein rückwärtiges Bodenblech 106 an, das sich schräg nach unten und vorn erstreckt und in einen trichterförmigen Sumpf 108 der Überkehrschnecke 52 übergeht. Ein unterer Förderboden 110 erstreckt sich vom rückwärtigen Ende des Untersiebs 92 oberhalb des rückwärtigen Bodenblechs 106 und oberhalb der Überkehrschnecke 52 schräg nach vorn und unten und endet oberhalb des Sumpfs 104 der Körnerschnecke 48. Unterhalb des Untersiebs 92 sind Luftleitbleche 112 angeordnet.

Durch nicht eingezeichnete Antriebe werden die Förderböden 40, 42 und 80 sowie das Vorreinigungssieb 72 mit der Leitfläche 76 und dem Fingerrechen 78, das Obersieb 90, das Untersieb 92 mit dem Rost 96, das Bodenblech 106 sowie der untere Förderboden 110 und die Luftleitbleche 112, die sämtlich durch Schwingen am Rahmen 12 abgestützt sind, durch den Verbrennungsmotor 58 während des Betriebs in eine im Wesentlichen nach vorn und hinten gerichtete Bewegung versetzt. Dazu sind sie in einem in den genannten Richtungen schwingenden Siebkasten angebracht. Sie können sich jeweils gleich- oder zumindest teilweise gegensinnig bewegen. Hierzu wird auf die Offenbarung der DE 30 42 734 C verwiesen. Das Gebläse 62 mit seinem Gehäuse 66 sowie die Wände des Kanals 82, die Leitbleche 94 und 102, die Sümpfe 104 und 108 und die Körnerschnecke 48 und die Überkehrschnecke 52 sind jedoch starr mit dem Rahmen 12 verbunden. Die Breite der Reinigungseinrichtung 46 und ihrer Organe entspricht zumindest etwa der Breite des Mehrtrommeldreschwerks und der Strohschüttler 32.

Während des Betriebs erzeugt das Gebläse 62 auch im ersten Gebläseauslass 68 einen Luftstrom, der zum Teil durch den Rost 96 nach hinten und oben hindurchströmt. Der verbleibende Luftstrom aus dem ersten Gebläseauslass 68 gelangt, teilweise geführt durch die Luftleitbleche 112, an die Unterseite des Untersiebs 92 und durchströmt es. Der durch den Rost 96 und das Untersieb 92 tretende Luftstrom gelangt zur Fallstufe 88 und an die Unterseite des Obersiebs 90.

Das Gemisch aus Korn und Spreu, das - wie bereits oben erwähnt - an der Rückseite des Vorreinigungssiebs 72 durch den Fingerrechen 78 hindurch oder an seiner Oberseite entlang auf das Obersieb 90 gelangt, wird durch das Obersieb 90 in an sich bekannter Weise durch den Luftstrom und die Sieblamellen gereinigt. Das durch das Obersieb 90 hindurch tretende Gemisch aus Korn und Spreu gelangt auf das Untersieb 92, während die verbleibende Spreu durch den Luftstrom nach hinten abgefördert und vorzugsweise durch den bereits erwähnten Spreuverteiler oder Strohhäcksler aus dem Mähdrescher 10 ausgetragen wird. Das Gemisch aus Spreu und Korn auf dem Untersieb 92 wird durch das Untersieb 92 ebenfalls in an sich bekannter Weise gereinigt, wobei das durch die Sieblamellen des Untersiebs 92 tretende Korn durch den unteren Förderboden 110 zur Körnerschnecke 48 und in den Korntank 50 gelangt. Die Überkehr wird an der Rückseite des Untersiebs 92 durch das Bodenblech 106 zur Überkehrschnecke 52 verbracht.

Das ebenfalls bereits oben erwähnte Gemisch aus Korn und Spreu, das die Sieblamellen des Vorreinigungssiebs 72 passiert, fällt zum Teil direkt (das den rückwärtigen Bereich des Vorreinigungssiebs 72 durchströmende Gemisch) und zum Teil über den Förderboden 80 (das den vorderen Bereich des Vorreinigungssiebs 72 durchströmende Gemisch) oberhalb des Gebläses 62 auf den Rost 96. Das auf dem Rost 96 liegende Gemisch aus Korn und Spreu wandert entlang der Oberseite des Rosts 96 nach hinten und gelangt anschließend auf das Untersieb 92, auf dem es in der oben erwähnten Weise in Korn und Überkehr getrennt wird. Der durch den Rost 96 nach oben und hinten strömende Luftstrom bewirkt eine Auflockerung des Gemischs und führt leichtere Partikel (Spreu) mit sich mit. Auf das Untersieb gelangt daher ein aufgelockertes und in einem gewissen Maße weiter vorgereinigtes Gemisch. Dadurch wird die Wirkungsweise des Untersiebs 92 verbessert, was zu einer Vergrößerung des möglichen Durchsatzes des Mähdreschers bzw. zu einer besseren Reinigungswirkung führt.

Der Rost 96 könnte einen Teil der in dem Gemisch enthaltenen Körner direkt nach unten durchlassen, so dass sie in den trichterförmigen Sumpf 104 der Körnerschnecke 48 bzw. seine nach vorn ansteigende Verlängerung fallen und von dort direkt in den Korntank 50 transportiert werden. Diese Körner belasten das Untersieb 92 demnach nicht.

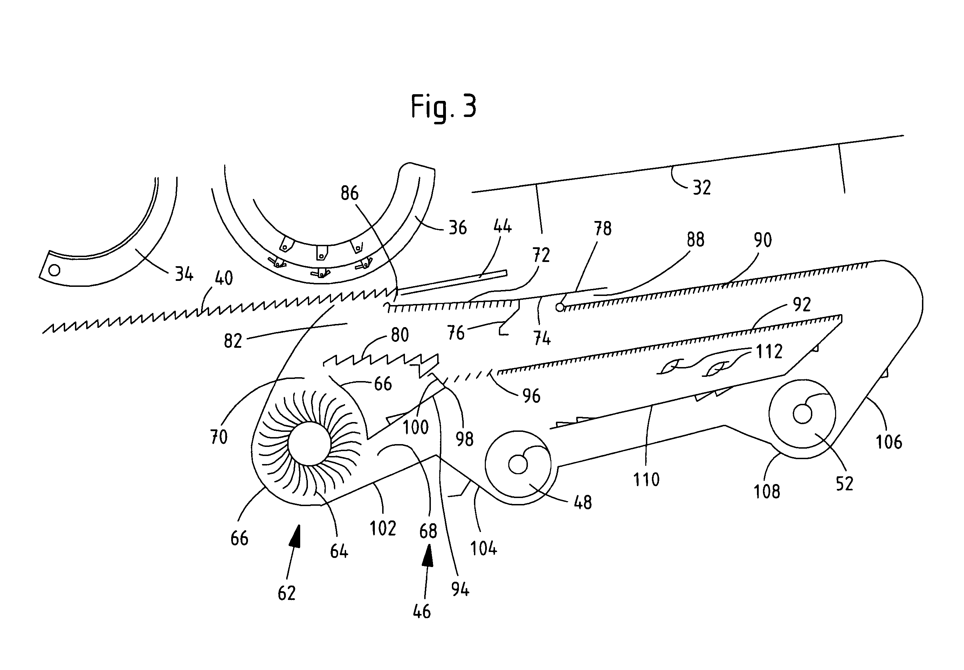

In der Figur 3 ist eine seitliche Ansicht einer zweiten Ausführungsform einer Reinigungseinrichtung 46 dargestellt. Mit der ersten Ausführungsform übereinstimmende Elemente sind mit denselben Bezugszeichen gekennzeichnet. Der wesentliche Unterschied zur ersten Ausführungsform liegt darin, dass der zweite Gebläseauslass 70 und der stromab des zweiten Gebläseauslasses 70 liegende, zur Fallstufe 86 und zum Vorreinigungssieb 72 führende Kanal 82 direkt schräg nach hinten und oben gerichtet sind. Der Förderboden 80 oberhalb des Gehäuses 66 des Gebläses 62 ist demnach ebenfalls verkürzt und der Zwischenraum 84 zwischen dem vorderen Förderboden 40 und dem Förderboden 80 oberhalb des Gehäuses 66 des Gebläses 62 entfällt.

## Patentansprüche

1. Reinigungseinrichtung (46) für einen Mähdrescher (10), mit einem Vorreinigungssieb (72), dessen Oberseite im Betrieb ein Gemisch aus Korn und Spreu zuführbar ist, einem Obersieb (90), dem das von der Oberseite des Vorreinigungssiebs (72) abgegebene Gemisch aus Korn und Spreu zuführbar ist, einem Untersieb (92), dem das durch das Vorreinigungssieb (72) hindurch tretende Gemisch aus Korn und Spreu zuführbar ist, und mit einem Gebläse (62) zur Beaufschlagung des Vorreinigungssiebs (72), des Obersiebs (90) und des Untersiebs (92) mit Luftströmen, **dadurch gekennzeichnet, dass** das durch das Vorreinigungssieb (72) hindurch getretene Gemisch aus Korn und Spreu auf seinem Weg zwischen dem Vorreinigungssieb (72) und dem Untersieb (92) über einen vom Untersieb (92) getrennten, für Luft durchlässigen Rost (96) führbar ist, der ebenfalls durch das Gebläse (62) mit einem Luftstrom beaufschlagbar ist.

2. Reinigungseinrichtung (46) nach Anspruch 1, **dadurch gekennzeichnet, dass** das Gebläse (62) einen ersten Gebläseauslass (68), durch den das Untersieb (92) und der Rost (96) mit einem Luftstrom beaufschlagbar sind, und einen zweiten Gebläseauslass (70) aufweist, durch den das Vorreinigungssieb (72) mit einem Luftstrom beaufschlagbar ist.

3. Reinigungseinrichtung (46) nach Anspruch 2, **dadurch gekennzeichnet, dass** das Obersieb (92) vom ersten Gebläseauslass (68) durch den Rost (96) und/oder durch das Untersieb (92) hindurch mit einem Luftstrom beaufschlagbar ist.

4. Reinigungseinrichtung (46) nach Anspruch 2 oder 3, **dadurch gekennzeichnet, dass** eine Fallstufe (88) zwischen der Rückseite des Vorreinigungssiebs (72) und dem Obersieb (92) durch den ersten Gebläseauslass (68) und den Rost (96) hindurch mit einem Luftstrom beaufschlagbar ist.

5. Reinigungseinrichtung (46) nach einem der Ansprüche 1 bis 4, **dadurch gekennzeichnet, dass** sich der Rost (96) zumindest näherungsweise in der Ebene des Untersiebs (92) und in Fahrtrichtung vor dem Untersieb (92) befindet.

6. Reinigungseinrichtung (46) nach einem der Ansprüche 1 bis 5, **dadurch gekennzeichnet, dass** der Rost (96) flache, schräg nach hinten und oben ansteigende Lamellen umfasst, die starr oder verstellbar befestigt sind.

7. Reinigungseinrichtung (46) nach Anspruch 6, **dadurch gekennzeichnet, dass** in Fahrtrichtung vorn angeordnete Lamellen des Rosts (96) kürzer als in Fahrtrichtung weiter hinten angeordnete Lamellen sind.

8. Reinigungseinrichtung (46) nach einem der Ansprüche 1 bis 7, **dadurch gekennzeichnet, dass** der Rost (96) gemeinsam mit dem Untersieb (92) schwingbeweglich ist.

9. Mähdrescher (10) mit einer Reinigungseinrichtung (46) nach einem der Ansprüche 1 bis 8.

## Claims

1. Cleaning device (46) for a combine (10), with a pre-cleaning sieve (72), the upper side of which can be fed a mixture of grain and chaff during operation, an upper sieve (90) to which the mixture of grain and chaff dispensed from the upper side of the pre-cleaning sieve (72) can be fed, a lower sieve (92) to which the mixture of grain and chaff passing through the pre-cleaning sieve (72) can be fed, and with a blower (62) for acting upon the pre-cleaning sieve (72), the upper sieve (90) and the lower sieve (92) with air flows, **characterized in that** the mixture of grain and chaff which is passed through the pre-cleaning sieve (72) can be guided on its route between the pre-cleaning sieve (72) and the lower sieve (92) via an air-permeable grate (96) which is separate from the lower sieve (92) and can likewise be acted upon with an air flow by the blower (62).

2. Cleaning device (46) according to Claim 1, **characterized in that** the blower (62) has a first blower outlet (68) through which the lower sieve (92) and the grate (96) can be acted upon with an air flow, and a second blower outlet (70) through which the pre-cleaning sieve (72) can be acted upon with an air flow.

3. Cleaning device (46) according to Claim 2, **characterized in that** the upper sieve (90) can be acted upon with an air flow by the first blower outlet (68) through the grate (96) and/or through the lower sieve (92).

4. Cleaning device (46) according to Claim 2 or 3, **characterized in that** a dropping step (88) between the rear side of the pre-cleaning sieve (72) and the upper sieve (90) can be acted upon with an air flow through the first blower outlet (68) and the grate (96).

5. Cleaning device (46) according to one of Claims 1 to 4, **characterized in that** the grate (96) is located at least approximately in the plane of the lower sieve (92) and in front of the lower sieve (92) in the direction of travel.

6. Cleaning device (46) according to one of Claims 1 to 5, **characterized in that** the grate (96) comprises flat slats which rise obliquely to the rear and upwards and are fastened rigidly or adjustably.

7. Cleaning device (46) according to Claim 6, **characterized in that** slats of the grate (96) which are arranged at the front in the direction of travel are shorter than slats arranged further to the rear in the direction of travel.

8. Cleaning device (46) according to one of Claims 1 to 7, **characterized in that** the grate (96) can be swivelled together with the lower sieve (92).

9. Combine (10) with a cleaning device (46) according to one of Claims 1 to 8.

## Revendications

1. Dispositif de nettoyage (46) pour une moissonneuse-batteuse (10), comprenant une toile de pré-nettoyage (72), dont le côté supérieur peut recevoir pendant le fonctionnement un mélange de grains et de balles, une toile supérieure (90) qui peut recevoir le mélange de grains et de balles issu du côté supérieur de la toile de pré-nettoyage (72), une toile inférieure (92) qui peut recevoir le mélange de grains et de balles traversant la toile de pré-nettoyage (72), et une soufflante (62) pour solliciter la toile de pré-nettoyage (72), la toile supérieure (90) et la toile inférieure (92) avec des jets d'air, **caractérisé en ce que** le mélange de grains et de balles ayant traversé la toile de pré-nettoyage (72), sur son chemin entre la toile de pré-nettoyage (72) et la toile inférieure (92), peut être guidé par le biais d'une grille (96) séparée de la toile inférieure (92) et perméable à l'air, qui peut également être sollicitée avec un jet d'air par la soufflante (62).

2. Dispositif de nettoyage (46) selon la revendication 1, **caractérisé en ce que** la soufflante (62) présente une première sortie de soufflante (68) par laquelle la toile inférieure (92) et la grille (96) peuvent être sollicitées avec un jet d'air, et une deuxième sortie de soufflante (70) par laquelle la toile de pré-nettoyage (72) peut être sollicitée avec un jet d'air.

3. Dispositif de nettoyage (46) selon la revendication 2, **caractérisé en ce que** la toile supérieure (90) peut être sollicitée avec un jet d'air depuis la première sortie de soufflante (68) à travers la grille (96) et/ou la toile inférieure (92).

4. Dispositif de nettoyage (46) selon la revendication 2 ou 3, **caractérisé en ce qu'**un étage de chute (88) entre le côté arrière de la toile de pré-nettoyage (72) et la toile supérieure (90) peut être sollicité par un jet d'air à travers la première sortie de soufflante (68) et la grille (96).

5. Dispositif de nettoyage (46) selon l'une quelconque des revendications 1 à 4, **caractérisé en ce que** la grille (96) se trouve au moins approximativement dans le plan de la toile inférieure (92) et dans la direction de conduite avant la toile inférieure (92).

6. Dispositif de nettoyage (46) selon l'une quelconque des revendications 1 à 5, **caractérisé en ce que** la grille (96) comprend des lamelles plates, montant en biais vers l'arrière et vers le haut, qui sont fixées rigidement ou de manière réglable.

7. Dispositif de nettoyage (46) selon la revendication 6, **caractérisé en ce que** les lamelles de la grille (96) qui sont disposées en avant dans la direction de conduite sont plus courtes que les lamelles disposées plus en arrière dans la direction de conduite.

8. Dispositif de nettoyage (46) selon l'une quelconque des revendications 1 à 7, **caractérisé en ce que** la grille (96) peut se déplacer par oscillation conjointement avec la toile inférieure (92).

9. Moissonneuse-batteuse (10) comprenant un dispositif de nettoyage (46) selon l'une quelconque des revendications 1 à 8.
